# EUROPEAN PATENT SPECIFICATION

(11) **EP 1 675 910 B1**
(45) Date of publication and mention of the grant of the patent: **01.07.2009**
(21) Application number: 04794906.0
(22) Date of filing: 13.10.2004
(51) Int. Cl.: C08L 69/00, C08K 9/04, C08K 3/22

(54) **LIGHT-COLORED POLYCARBONATE COMPOSITIONS AND METHODS**
SCHWACH GEFÄRBTE POLYCARBONATZUSAMMENSETZUNGEN UND VERFAHREN
COMPOSITIONS DE POLYCARBONATE DE COULEUR PALE ET PROCEDES DE PREPARATION ASSOCIES

(30) Priority: 16.10.2003 US 605671
(43) Date of publication of application: 05.07.2006
(73) Proprietor: Sabic Innovative Plastics IP B.V., 4612 PX Bergen op Zoom (NL)
(72) Inventor: MARUGAN, Monica, M., NL-4623 XZ Bergen op Zoom (NL); EBELING, Thomas, Forest VA 24551 (US)
(74) Representative: Modiano, Micaela Nadia
(86) International application number: PCT/US2004/033673
(87) International publication number: WO 2005/037921

(56) References cited:
- EP-A- 0 524 731
- US-A- 6 133 360

## Description

### Background of Invention

This application relates to polycarbonate compositions, and particularly to polycarbonate/styrenic molding compositions which are colored using titanium dioxide to produce a white or other light colored product.

Typically, blends of polycarbonate resins and styrenics include rubber particles such as polybutadiene to serve as impact modifiers. However, the addition of grafted rubbers to polycarbonate/styrenic blends results in a reduction in the flame retardancy of the blend, making it necessary to add flame-retardants that may have a detrimental effect on the high heat characteristics of the material.

### Summary of Invention

The present invention provides a composition comprising:
(a) a bulk resin component comprising a polycarbonate;
(b) a polycarbonate-siloxane copolymer in an amount sufficient to provide an amount of siloxane of at least 3.6% by weight of the total composition; and
(c) a colorant composition comprising titanium dioxide having an organic coating, for example a coating comprising a polysiloxane, wherein the amount of titanium dioxide is from 1 to 1.5% by weight of the total composition.

The invention further provides shaped articles, having a wall thickness greater than a first thickness that are formed from a molding composition comprising the above composition.

The titanium dioxide has an organic coating, and the amount of polycarbonate-siloxane copolymer is selected such that molding composition achieves a V0 UL fire rating at the first thickness.

The invention further provides a method for forming a light colored, flame retardant polycarbonate article comprising the steps of forming a blend comprising:
(a) a bulk resin component comprising a polycarbonate;
(b) a polycarbonate-siloxane copolymer in an amount sufficient to provide an amount of siloxane of at least 3.6% by weight of the total composition; and
(c)a colorant composition comprising titanium dioxide having an organic coating, for example a coating comprising a polysiloxane, wherein the amount of titanium dioxide is from 1 to 1.5% by weight of the total composition; and forming an article from the blend.

The invention further provides a method for enhancing the flame retardance of a light colored composition comprising a bulk resin component comprising a polycarbonate; a polycarbonate-siloxane copolymer; and a colorant composition comprising titanium dioxide, said method comprising the steps as defined in claim 9.

### Brief Description of Drawings

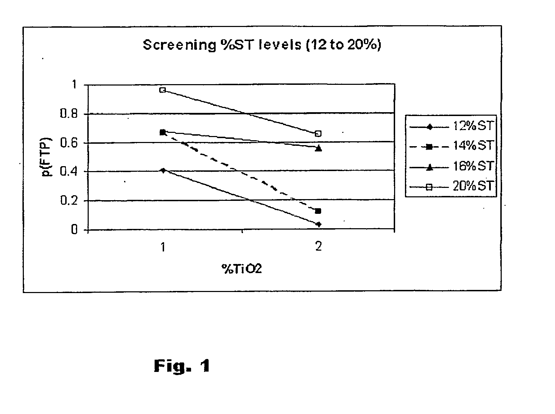

Fig. 1 shows the relationship of p(FTP) to %TiO₂ at various levels of polycarbonate-siloxane copolymer.

### Detailed Description

Numerical values in the specification and claims of this application, particularly as they relate to polymer compositions, reflect average values for a composition that may contain individual polymers of different characteristics. Furthermore, the numerical values should be understood to include numerical values which are the same when reduced to the same number of significant figures and numerical values which differ from the stated value by less than the experimental error of the measurement technique used in the present application to determine the value.

As noted above, the addition of styrenic impact modifiers to the polycarbonates has a known detrimental effect on the flame retardancy of the composition. This problem can be overcome by the addition of polycarbonate-siloxane copolymers. However, the inventors have observed addition of titanium dioxide to polycarbonate/polycarbonate-siloxane copolymer blends to achieve light-colored products results in a reduction in the fire retardance properties of the composition. The present invention provides light colored compositions that avoid this reduction in product quality, even in the presence of rubbery impact modifiers, and thus provides useful, fire-resistant lightly colored materials which can be used in a variety of applications including computer and business machine housings, battery chargers for the telecommunications industry and electrical applications.

In a first embodiment, the invention provides a titanium dioxide-containing polycarbonate blend comprising a bulk polycarbonate resin, a polycarbonate-siloxane copolymer and a organic-coated titanium dioxide. In other embodiments, the compositions of the invention also comprise a rubber impact modifier and/or an effective flame-retarding amount of a flame retardant.

As used in the specification and claims of this application, the term "lightly-colored" refers to any coloration of the polymer blend that includes titanium dioxide as a component of the colorant composition utilized. In particular, the term lightly colored encompasses white, cream, tan and gray colorations achieved by combining titanium dioxide with other fillers or pigments of various colors, as well as colorations achieved by mixing titanium dioxide with soluble dyes.

As used in the specification and claims of this application, the term "bulk polycarbonate resin" refers to a polycarbonate resin used as a base component of a composition. There are numerous polycarbonate resin formulations known, and the bulk polycarbonate resin portion of a given composition is selected to achieve the properties desired for a given application. Thus, the bulk polycarbonate may be a high heat polycarbonate, a polycarbonate selected to have good flow properties consistent with use in molding applications or extrusion. In general, the bulk component will be at least 50% of a total composition. In some embodiments, the bulk component is greater than 75% of the total composition.

The bulk component includes a polycarbonate resin, which may be of a single type or mixtures of two or more polycarbonate homopolymers and/or copolymers. The polycarbonate(s) may be made by either an interfacial process or a melt transesterification process. In the most common embodiment of the interfacial process, bisphenol A (BPA) and phosgene are reacted to form polycarbonate. When a melt transesterification process is used, polycarbonate is made by reacting a diaryl carbonate and a dihydric phenol. The techniques for performing melt transesterification reactions are well known, and are, for example, described in Organic Polymer Chemistry by K. J. Saunders, 1973, Chapman and Hall Ltd., as well as in a number of U.S. patents, including U.S. Pat. Nos. 3,442,854; 5,026,817; 5,097,002; 5,142,018; 5,151,491; and 5,340,905. As is known in the art, there are numerous diaryl carbonates and dihydric phenols which may be employed. The specific diaryl carbonate and the specific dihydric phenol selected will depend on the nature of the desired polycarbonate. Common diaryl carbonates which may be employed include but are not limited to diphenyl carbonate, ditolyl carbonate, bis(chlorophenyl) carbonate; m-cresyl carbonate; dinaphthyl carbonate; bis(diphenyl) carbonate; diethyl carbonate; dimethyl carbonate; dibutyl carbonate; and dicyclohexyl carbonate. Common dihydric phenols include but are not limited to bis(hydroxyaryl) alkanes such as bis(4-hydroxyphenyl)methane; 1,1-bis(4-hydroxyphenyl)ethane; 2,2-bis(4-hydroxyphenyl)propane (also known as bisphenol A); 2,2-bis(4-hydroxyphenyl)butane; 2,2-bis(4-hydroxyphenyl)octane; bis(4-hydroxyphenyl)phenylmethane; 2,2-bis(4-hydroxy-1-methylphenyl)propane; 1,1-bis(4-hydroxy-t-butylphenyl) propane; and 2,2-bis(4-hydroxy-3-bromophenyl)propane; bis(hydroxyaryl)cycloalkanes such as 1,1-(4-hydroxyphenyl)cyclopentane and 1,1-bis(4-hydroxyphenyl)cyclohexane; dihydroxyaryl ethers such as 4,4'-dihydroxydiphenyl ether and 4,4'dihydroxy-3,3'-dimethylphenyl ether; dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; and dihydroxydiaryl sulfones such as 4,4'-dihydroxydiphenyl sulfone and 4,4'-dihydroxy-3,3'-dimethyldiphenyl sulfone. In one common for of polycarbonate, the aromatic dihydroxy compound is bisphenol A (BPA) and the diaryl carbonate is diphenyl carbonate.

The polycarbonate resins used in the invention comprise repeating structural units of the formula (I): 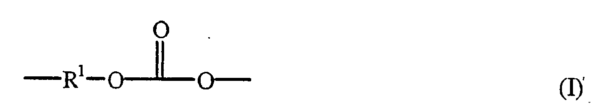 in which at least about 60 percent of the total number of R¹ groups are aromatic organic radicals and the balance thereof are aliphatic, alicyclic, or aromatic radicals. Preferably, R¹ is an aromatic organic radical and, more preferably, a radical of the formula (II): 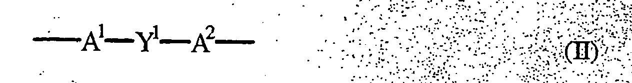 wherein each of A¹ and A² is a monocyclic divalent aryl radical and Y¹ is a bridging radical having one or two atoms which separate A¹ from A². In an exemplary embodiment, one atom separates A¹ from A². Illustrative non-limiting examples of radicals of this type are -O-, -S-, -S(O)-, -S(O)₂-, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ can be a hydrocarbon group or a saturated hydrocarbon group such as methylene, cyclohexylidene or isopropylidene.

Preferred polycarbonates are based on bisphenol A, in which each of A¹ and A² is p-phenylene and Y¹ is isopropylidene. Preferably, the average molecular weight of the polycarbonate is in the ranges from about 5,000 to about 100,000, more preferably in the range from about 10,000 to about 65,000, and most preferably in the range from about 15,000 to about 35,000. When present, the polycarbonate resin is employed in amounts of about 1 to about 99 weight percent, based on the total weight of the composition. Preferably the polycarbonate resin is present in an amount of about 1 to about 95, more preferably about 5 to about 90 and most preferably about 5 to about 85, based on the total weight of the composition.

In addition to linear homo-polycarbonates, the bulk polycarbonate resin component may include hetero-polycarbonate species including two or more different dihydric phenols or a copolymer of a dihydric phenol with a glycol or with a hydroxy- or acid-terminated polyester or with a dibasic acid or hydroxy acid. Polyarylates and polyester-carbonate resins or their blends can also be employed. Branched polycarbonates are also useful, as well as blends of linear polycarbonate and a branched polycarbonate. The branched polycarbonates may be prepared by adding a branching agent during polymerization. These branching agents are well known and may comprise polyfunctional organic compounds containing at least three functional groups which may be hydroxyl, carboxyl, carboxylic anhydride, haloformyl and mixtures thereof. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)- isopropyl)benzene), tris-phenol PA (4(4(1,1-bis(p-hydroxyphenyl)-ethyl) alpha,alpha-dimethyl benzyl)phenol), 4-chloroformyl phthalic anhydride, trimesic acid and benzophenone tetracarboxylic acid. The branching agents may be added at a level of about 0.05-2.0 weight percent. Branching agents and procedures for making branched polycarbonates are described in U.S. Patent. Nos. 3,635,895 and 4,001,184 which are incorporated by reference. All types of polycarbonate end groups are contemplated as being useful in the polycarbonate composition.

The bulk polycarbonate resin may also comprise blends of polycarbonate(s) with other non-polycarbonate thermoplastics. Non-limiting examples of thermoplastic resins that may be included in the bulk component include (a) polymers including as structural components aromatic vinyl monomers, (b) polymers including as structural components aromatic vinyl monomers and a vinyl cyanide monomers; (c) polymers including as structural component an aromatic vinyl monomers, a vinyl cyanide monomers and a rubber like polymer; (d) aromatic polyesters, (e) polyphenylene ethers, (f) polyether imides and (g) polyphenylene sulfides. Specific examples of such additional thermoplastic resins are styrene acrylonitrile copolymers and polymethyl(methacrylate).

Siloxane-polycarbonate block copolymers have been recognized for their low temperature ductility and flame retardancy and may also be utilized as the matrix for incorporating the phosphorescent pigments. These block copolymers can be made by introducing phosgene under interfacial reaction conditions into a mixture of a dihydric phenol, such as BPA, and a hydroxyaryl-terminated polydiorganosiloxane. The polymerization of the reactants can be facilitated by use of a tertiary amine catalyst. Polycarbonate-siloxane copolymers useful in the composition of the invention are known, for example from US Patents Nos. 4,746,701, 4,994,532, 5,455,310 and 6,252,013, which are incorporated herein by reference, and are sold commercially under the name LEXAN ST by General Electric Company. Mitsubishi Engineering Plastics has described a polycarbonate type resin composition that comprises (A) 100 parts weight (pts. wt.) polycarbonate type resin which consists of (a) 1-99 wt.% of polycarbonate resin, and (b) 99-1 wt. % polycarbonate-organopolysiloxane copolymer; (B) 0.1-5 pts. wt. of phosphate type compound; and (C) 0.2-2 pts. wt. of fibril-forming polytetrafluoroethylene in JP 10007897. The polycarbonate-polysiloxane copolymer from this disclosure may also be used in the present invention.

In general, the polycarbonate-siloxane copolymers useful in the invention are formed from polycarbonate blocks and poly(diorganosiloxane) blocks. The polycarbonate blocks comprise repeating structural units of the formula (I) in which at least about 60 percent of the total number of R1 groups are aromatic organic radicals and the balance thereof are aliphatic, alicyclic, or aromatic radicals. Preferably, R1 is an aromatic organic radical and, more preferably, a radical of the formula (II) wherein each of A1 and A2 is a monocyclic divalent aryl radical and Y1 is a bridging radical having one or two atoms which separate A1 from A2. In an exemplary embodiment, one atom separates A from A2. Illustrative non-limiting examples of radicals of this type are - O-, -S-, -S(O)-, -S(O)2-, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical Y 1 can be a hydrocarbon group or a saturated hydrocarbon group such as methylene, cyclohexylidene or isopropylidene.

The poly(diorganosiloxane) blocks comprise repeating structural units of the formula (III) 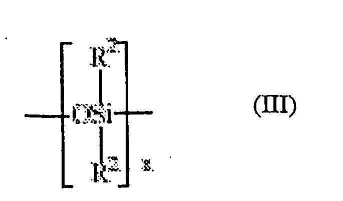 wherein each occurrence of R2 may be the same or different and is selected from C(1-13) monovalent organic radicals, and n is an integer greater than or equal to 1,
preferably greater than or equal to about 10, more preferably greater than or equal to about 25 and most preferably greater than or equal to about 40. It is desirable to have n be an integer less then or equal to about 1000, preferably less than or equal to about 100, more preferably less than or equal to about 75 and most preferably less than or equal to about 60. As is readily understood by one of ordinary skill in the art, n represents an average value.

In a preferred embodiment, the poly(diorganosiloxane) blocks comprise repeating structural units of the formula (IV): 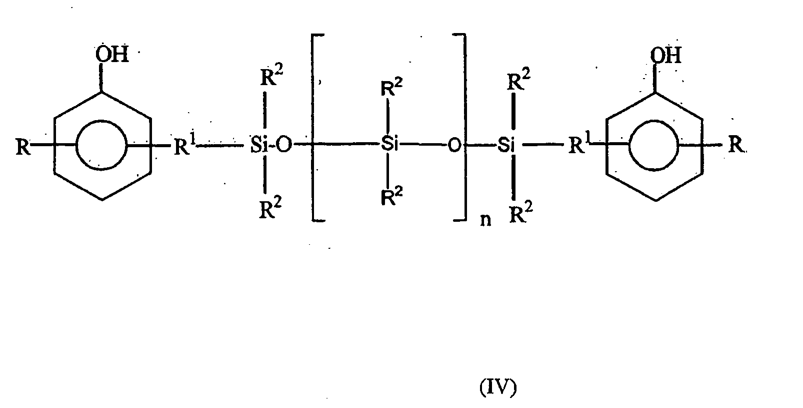 where each R may be the same or different and is selected from the group of radicals consisting of hydrogen, halogen, C(1-8) alkoxy, C(1-8) alkyl and C(6-13) aryl, R1 is a C(2-8) divalent aliphatic radical, R2 is selected from the same or different C(1-13) monovalent organic radicals, and n is an integer greater than or equal to 1, preferably greater.than or equal to about 10, more preferably greater than or equal to about 25 and most preferably greater than or equal to about 40. It is also preferred to have n be an integer less then or equal to 1000, preferably less than or equal to 100, more preferably less than or equal to about 75 and most preferably less than or equal to about 60. In one embodiment n is less than or equal to 50. Particularly preferred hydroxyaryl-terminated polydiorganosiloxanes are those where R2 is methyl and R is hydrogen or methoxy and located in the ortho position to the phenolic substituent and where R1 is propyl and located ortho or para to the phenolic substituent.

Some of the radicals included within R in the above formula are halogen radicals, such as bromo, and chloro; alkyl radicals such as methyl, ethyl, and propyl; alkoxy radicals such as methoxy, ethoxy, and propoxy; aryl radicals such as phenyl, chlorophenyl, and tolyl. Radicals included within R3 are, for example, dimethylene, trimethylene and tetramethylene. Radicals included within R4 are, for example, C(1-8) alkyl radicals, haloalkyl radicals such as trifluoropropyl and cyanoalkyl radicals; aryl radicals such as phenyl, chlorophenyl and tolyl. R4 is preferably methyl, or a mixture of methyl and trifluoropropyl, or a mixture of methyl and phenyl.

The siloxane-polycarbonate block copolymers have a weight-average molecular weight (Mw, measured, for example, by Gel Permeation Chromatography, ultra-centrifugation, or light scattering) of greater than or equal to about 10,000, preferably greater than or equal to about 20,000. Also preferred is a weight average molecular weight of less than or equal to about 200,000, preferably less than or equal to about 100,000. It is generally desirable to have the polyorganosiloxane units contribute about 0.5 to about 80 wt% of the total weight of the siloxane-polycarbonate copolymer. The chain length of the siloxane blocks corresponds to about 10 to about 100 chemically bound organosiloxane units. They can be prepared such as described in for example US-A-5,530,083, incorporated herein by reference in its entirety.

In the examples below, the polycarbonate-siloxane copolymer is LEXAN ST (General Electric) which is a polycarbonate/polydimethylsiloxane (PC/PDMS) copolymer having 20% weight percent siloxane content based on the total weight of the copolymer and a block length of 50 units of the poly(diorganosiloxane) (n in formulas III and IV)The compositions in accordance with the present invention as set forth in the examples contain polycarbonate-siloxane copolymer in an amount of 18 weight percent or greater, for example 18 to 40 weight percent of the total composition, preferably 18 to 30 weight percent, and most preferably 18 to 25 weight percent. In these examples, however, the specific polycarbonate-siloxane copolymer employed contained 20% by weight of siloxane. Since it is believed to be the siloxane portion of the copolymer that is active in achieving the results of the present invention, an alternative and more general expression of the amount of copolymer is one based on the amount of silicon in the total composition. Thus, the amount of the polycarbonate-siloxane copolymer in the compositions of the invention is appropriately expressed as an amount sufficient to provide an amount of siloxane of at least 3.6% by weight of the total composition.

The compositions of the invention also contain a colorant composition comprising titanium dioxide. The selection of the titanium dioxide component is important in the context of the present invention, because as illustrated in the Comparative Examples, some titanium dioxide materials lead to a significant reduction in the fire-retardancy of the composition. Without intending to be bound by any particular mechanism, it is believed that this degradation of properties arises as a result of different distribution of black pigment, for example carbon black and titanium dioxide formulations producing unsuitable results. Specifically, microscopic evaluation shows fairly even dispersion of black pigment particles, while undesirable types of titanium dioxide are seen to aggregate, apparently with the siloxane of the polycarbonate-siloxane copolymer. This problem is alleviated in the present invention by maintaining a minimum level of polycarbonate-siloxane copolymer which is dependent on the thickness of the material to be molded, and through the use of titanium dioxide having an organic coating, and optionally an additional inorganic coating. Commercially available TiO₂ pigments are typically prepared from colloidal suspensions in which low levels of alumina are added to chemically passivate the pigment surface. A secondary organic coating, for example an organo-silicone coating, is then applied to further reduce surface reactivity and improve handling characteristics. While the exact coating formulations are often kept proprietary by the supplier, the general compositions of the organic coating and whether or not Al₂O₃ is used is frequently known. Specific examples of suitable titanium dioxide preparations that are commercially available include Tioxide R-FC5 (Huntsman), a small crystal product coated with TMP (trimethylolpropanol), PDMS (polydimethylsiloxane) and Al₂O₃; Titafrance RL91, a small crystal product coated with 1.2% PDMS silicone oil; and Kronos 2230, a normal-sized crystal product coated with PDMS polysiloxane and Al-₂O₃. Based on results using these materials, the claimed invention encompasses TiO₂ with an organic coating, and in particular an organic coating comprising a polysiloxane, TMP or mixtures thereof.

The amount of titanium dioxide is suitably from 1 to 1.5% by weight of the total composition. Higher amounts of the polycarbonate-siloxane copolymer facilitate the inclusion of higher amounts of titanium dioxide.

In addition to titanium dioxide, the colorant composition may include dyes, pigments or other colorants which in combination with the titanium dioxide produce an overall light coloration in the composition. The colorant composition may also comprise visual effects materials such as metallic-effect pigment, a metal oxide-coated metal pigment, a platelike graphite pigment, a platelike molybdenum disulfide pigment, a pearlescent mica pigment, a metal oxide-coated mica pigment, an organic effect pigment, a layered light interference pigment, a polymeric holographic pigment or a liquid crystal interference pigment. In one embodiment, the effect pigment is a metal effect pigment selected from the group consisting of aluminum, gold, brass and copper metal effect pigments; especially aluminum metal effect pigments. In another embodiment, the effect pigments are pearlescent mica pigments or a large particle size, preferably platelet type, organic effect pigment selected from the group consisting of copper phthalocyanine blue, copper phthalocyanine green, carbazole dioxazine, diketopyrrolopyrrole, iminoisoindoline, iminoisoindolinone, azo and quinacridone effect pigments.

The thermoplastic composition may optionally comprise a rubbery impact modifier. When present, the impact modifier copolymer resin is suitably added to the thermoplastic composition in an amount between about 1 and 30 % by weight and may comprise one of several different rubbery modifiers such as graft or core shell rubbers or combinations of two or more of these modifiers. Suitable are the groups of modifiers known as acrylic rubbers, ASA rubbers, diene rubbers, organosiloxane rubbers, EPDM rubbers, styrene-butadiene-styrene (SBS) or styrene-ethylene-butadiene-styrene (SEBS) rubbers, ABS rubbers, MBS rubbers and glycidyl ester impact modifiers.

The composition may also include an anti-drip agent such as a fluoropolymer. The fluoropolymer may be a fibril forming or non-fibril forming fluoropolymer. Preferably the fluoropolymer is a fibril forming polymer. In some embodiments polytetrafluoroethylene is the preferred fluoropolymer. In some embodiments it is preferred to employ an encapsulated fluoropolymer i.e. a fluoropolymer encapsulated in a polymer as the anti-drip agent. An encapsulated fluoropolymer can be made by polymerizing the polymer in the presence of the fluoropolymer. Alternatively, the fluoropolymer can be pre-blended in some manner with a second polymer, such as for, example, an aromatic polycarbonate resin or a styrene-acrylonitrile resin as in, for example, U.S. Patent Nos. 5,521,230 and 4,579,906 to form an agglomerated material for use as an anti-drip agent. Either method can be used to produce an encapsulated fluoropolymer.

The fluoropolymer in the encapsulated fluoropolymer comprises a fluoropolymer with a melting point of greater than or equal to about 320°C, such as polytetrafluoroethylene. A preferred encapsulated fluoropolymer is a styrene-acrylonitrile copolymer encapsulated polytetrafluoroethylene (i.e., TSAN). TSAN can be made by copolymerizing styrene and acrylonitrile in the presence of an aqueous dispersion of polytetrafluoroethylene (PTFE). TSAN can, for example, comprise about 50 wt% PTFE and about 50 wt% styrene-acrylonitrile copolymer, based on the total weight of the encapsulated fluoropolymer. The styrene-acrylonitrile copolymer can, for example, be about 75 wt% styrene and about 25 wt% acrylonitrile based on the total weight of the copolymer. TSAN offers significant advantages over polytetrafluoroethylene, namely TSAN is more readily dispersed in the composition.

When present, the anti-drip agent is present in an amount effective to reduce the potential for dripping, for example in an amount of from 0.1 to 1.4 % by weight, more commonly 0.5 to 1% by weight.

The compositions of the invention may also contain an effective flame-retarding amount of a flame retardant. The flame retardant may comprise a phosphate based flame retardant or a sulfonate salt flame retardant. When the composition comprises flammable components such as alkylaromatic copolymers it is preferable for the flame retardant to comprise an organic phosphate flame retardant. The organic phosphate flame retardant is preferably an aromatic phosphate compound of the formula (V): 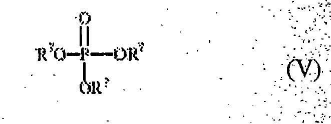 where R⁷ is the same or different and is alkyl, cycloalkyl, aryl, alkyl substituted aryl, halogen substituted aryl, aryl substituted alkyl, halogen, or a combination of any of the foregoing, provided at least one R⁷ is aryl. Suitable phosphate flame retardants include those based upon resorcinol such as, for example, resorcinol tetraphenyl diphosphate, as well as those based upon bis-phenols such as, for example, bis-phenol A tetraphenyl diphosphate (BPADP). Phosphates containing substituted phenyl groups are also suitable.

The flame retardant materials may also be a sulfonate salt such as Rimar salt (potassium perfluorobutane sulfonate) and potassium diphenylsulfone sulfonate. See also the perfluoroalkane sulfonates described in US Patent No. 3,775,367, which is incorporated herein by reference.

The compositions of the invention may also include other optional components of the type commonly employed in polycarbonate compositions. Such components include without limitations antioxidants, UV stabilizers, mold release agents, fillers such as clay, wollastonite, or talc, reinforcing agents such as glass fibers, and antistats.

The invention also provides articles, for example molded or extruded articles that have flame retardant properties. In assessing flame-retardance of a polycarbonate article, it is relevant to consider the point of minimum wall thickness, since this the region of the article that is most flammable. In the claims of this application, the minimum wall thickness is referred to as a "first thickness" and the article is formed from a molding composition comprising (a) a bulk polycarbonate resin component; (b) a polycarbonate-siloxane copolymer; and(c) a colorant composition comprising titanium dioxide, wherein the titanium dioxide has an organic coating, and the amount of polycarbonate-siloxane copolymer is selected such that molding composition achieves a V0 UL fire rating at the first thickness. Thus, the desired amount of polycarbonate-siloxane copolymer depends on the minimum thickness of the article and the amount of titanium dioxide and the type of organic coating. Suitable amounts at different thicknesses may vary somewhat depending on other components in the molding composition, however the following values provide exemplary guidance.

| Thickness (mm) | Titanium Dioxide (coating) % | % polycarbonate-siloxane copolymer (containing 20% siloxane by weight) |
|---|---|---|
| 1.6 | (TMT/PDMS) 1-1.5 | >18 |
| 2.0 | (TMP/PDMS) 1-1.5 | >15 |
| 3.0 | (TMP/PDMS) 1-1.5 | >8 |

The compositions of the invention are suitably used in a method for forming a light colored, flame retardant polycarbonate articles. This method comprises the steps of forming a blend comprising:(a) a bulk polycarbonate resin component; (b) a polycarbonate-siloxane copolymer in an amount sufficient to provide an amount of siloxane of at least 3% by weight of the total composition; and(c)a colorant composition comprising titanium dioxide, wherein the amount of titanium dioxide is from 1 to 2.0 % by weight of the total composition; and forming an article from the blend. The blend may be formed in a melt extruder or other common equipment, and the article is suitably formed using known techniques for molding, for example injection molding, or by extrusion.

The application will now be further described with reference to the following non-limiting examples:

**Example 1:** Four grades of TiO2 were obtained from commercial suppliers. The grades and their characteristics are summarized in Table 1. Samples of white compositions were prepared were as outlined in Table 2, and tested for fire retardancy and melt viscosity. The compositions contained the following additives where indicated: a mold release agent, pentaerythritol tetrastearate, commercially available as PETS G from Faci (>90 percent esterified); a phosphite stabilizer, tris(2,4-di-tert-butylphenylphosphite), commercially available as IRGAFOS 168 from Ciba; a hindered phenol stabilizer, octadecyl-3-(3,5-di-tert-butyl-4-hydroxyphenyl) propionate, commercially available as IRGANOX 1076 from Ciba; Flame retardant available under the tradename NcendX P-30 (bisphenol A bis( diphenylphosphate), or BPADP) commercially available from Albemarle and T-SAN, a drip retardant encapsulated poly(tetrafluorethylene), obtained from General Electric Plastics Europe, comprising 50 weight percent polystyrene acrylonitrile and 50 weight percent poly(tetrafluorethylene).

To prepare the samples, polycarbonate pellets of bisphenol-A polycarbonate made by a melt process with a Melt Flow rate, MVR @300°C, 1.2kg, of 23.5-28.5, target 26.0g/cm3 were combined with pellets of bisphenol-A polycarbonate made by a melt process with a Melt Flow rate, MVR @300°C, 1.2kg, of 5.1-6.9, target 6.0 g/cm3 (introduced via a powder feeder) and compounded on a Werner & Pfleiderer corotating twin screw extruder (25 millimeter screw) and subsequently molded according to ISO294 on a ENGEL injection molding machine, using Axxicon ISO Manufactured (AIM) Mould system for producing the UL bars specimens. Compositions were tested according to UL 94 standards for Vertical burning test V-0 at 1.6 millimeters. p(FTP) is the probability of a first time pass in the UL94 test. The results are set forth in Table 3.

| Table 1 | | | | | | |
|---|---|---|---|---|---|---|
| Sample No. | Product Name | Description (per supplier) | Organic Coating | Inorganic Coating | % TiO₂ | Supplier |
| 1 | Tioxide R-FC5 | small crystal, coated | TMP. PDMS | Al₂O₃ | 97.5 | Huntsman |
| 2 | Titafrance RL9 | small crystal, coated | PDMS (1.2 %) silicone oil | -- | | Millenium |
| 3 | Kronos 2230 | normal crystal, specially treated | PDMS polysiloxane | Al₂O₃ | 96.0 | Kronos |
| 4 | Titafrance RL11A | small crystal, unbolted | -- | -- | | Millenium |

| Table 2 | | | | | | | | | | | | | |
|---|---|---|---|---|---|---|---|---|---|---|---|---|---|
| | No colorant control | Black | 1 | 2 | 3 | 4 | 5 | 6 | 7 | 8 | 9 | 10 | 11 |
| Pellet Polycarbonate | 71.41 | 71.23 | 70.41 | 69.41 | 68.41 | 70.41 | 69.41 | 68.41 | 70.41 | 69.41 | 68.41 | 70.41 | 69.41 |
| Powder feeder Polycarbonate | 11.8 | 11.8 | 11.8 | 11.8 | 11.8 | 11.8 | 11.8 | 11.8 | 11.8 | 11.8 | 11.8 | 11.8 | 11.8 |
| polycarbonate-siloxane copolymer | 12 | 12 | 12 | 12 | 12 | 12 | 12 | 12 | 12 | 12 | 12 | 12 | 12 |
| BPADP | 2 | 2 | 2 | 2 | 2 | 2 | 2 | 2 | 2 | 2 | 2 | 2 | 2 |
| poly-SAN | 2 | 2 | 2 | 2 | 2 | 2 | 2 | 2 | 2 | 2 | 2 | 2 | 2 |
| TSAN | 0.4 | 0.4 | 0.4 | 0.4 | 0.4 | 0.4 | 0.4 | 0.4 | 0.4 | 0.4 | 0.4 | 0.4 | 0.4 |
| PETS (mold release) | 0.3 | 0.3 | 0.3 | 0.3 | 0.3 | 0.3 | 0.3 | 0.3 | 0.3 | 0.3 | 0.3 | 0.3 | 0.3 |
| Irgaphos 168 | 0.09 | 0.09 | 0.09 | 0.09 | 0.09 | 0.09 | 0.09 | 0.09 | 0.09 | 0.09 | 0.09 | 0.09 | 0.09 |
| Black Pigment | | 0.18 | | | | | | | | | | | |
| TiO₂sample 1 | | | 1 | 2 | 3 | | | | | | | | |
| TiO₂sumple 2 | | | | | | 1 | 2 | 3 | | | | | |
| TiO₂sample 3 | | | | | | | | | 1 | 2 | 3 | | |
| TiO₂smple 4 | | | | | | | | | | | | 1 | 2 |

| Table 3 | | | | | |
|---|---|---|---|---|---|
| Formulation | FOT2 (sec) | Stdev-FOT2 | p(FTP) V0 @ 1.6 mm | p(FTP) V1 @ 1.6 mm | MV @280°C, 1500 sec⁻¹ |
| No colorant control | 3.4 | 1.8 | 0.91 | 0.99 | 216 |
| Black pigment | 2.6 | 1.8 | 0.92 | 1.00 | 210 |
| 1 | 4.8 | 4.3 | 0.52 | 0.98 | 212 |
| 2 | 5.4 | 2.2 | 0.72 | 1.00 | 214 |
| 3 | 7.5 | 2.9 | 0.15 | 1.00 | 212 |
| 4 | 12.5 | 4.8 | 0.00 | 0.89 | 207 |
| 5 | 11.0 | 4.3 | 0.00 | 0.98 | 211 |
| 6 | 13.6 | 8.5 | 0.00 | 0.85 | 214 |
| 7 | 6.9 | 2.6 | 0.29 | 1.00 | 209 |
| 8 | 8.4 | 5.8 | 0.04 | 0.96 | 207 |
| 9 | 9.6 | 4.4 | 0.01 | 0.99 | 211 |
| 10 | 8.9 | 3.4 | 0.02 | 0.99 | |
| 11 | 17.6 | 18.0 | 0.00 | 0.56 | |

As is apparent from the results, while the compositions with no colorant (NC) or black pigment (BK) had p(FTP) V0 @1.6 mm of greater than 0.9 (indicating a greater than 90% likelihood of passing this test), none of the TiO2 containing formulations had a reasonable likelihood of passing. The melt viscosities were similar for each of the materials tested.

This example illustrates the unanticipated problem with using TiO2 to make white or light colored products in such compositions.

**Example 2:** Formulations were prepared in which the amount ofpolycarbonate-siloxane copolymer was varied from 12% to 20% using Tioxide R-FC5™ (TiO₂ samplel) as indicated in Table 4.

| Table 4 | | | | | | | | | | | | |
|---|---|---|---|---|---|---|---|---|---|---|---|---|
| | 13 | 14 | 15 | 16 | 17 | 18 | 19 | 20 | 21 | NC 2 | BK2 | BK3 |
| Pellet Polycarbonate | 70.49 | 70.34 | 69.84 | 69.34 | 69.34 | 68.34 | 67.8 4 | 66.34 | 65.84 | 70.84 | 71.16 | 71.16 |
| Powder feeder Polycarbonate | 11.95 | 11.8 | 11.3 | 10.8 | 9.8 | 9.8 | 9.3 | 7.8 | 7.3 | 12.3 | 11.8 | 11.8 |
| polycarbonate-siloxane copolymer | 12 | 12 | 12 | 14 | 14 | 16 | 16 | 20 | 20 | 12 | 12 | 12 |
| BPADP | 2 | 2 | 2 | 2 | 2 | 2 | 2 | 2 | 2 | 2 | 2 | 2 |
| poly-SAN | 2 | 2 | 2 | 2 | 2 | 2 | 2 | 2 | 2 | 2 | 2 | 2 |
| TSAN | 0.4 | 0.4 | 0.4 | 0.4 | 0.4 | 0.4 | 0.4 | 0.4 | 0.4 | 0.4 | 0.4 | 0.4 |
| PETS (mold release) | 0.3 | 0.3 | 0.3 | 0.3 | 0.3 | 0.3 | 0.3 | 0.3 | 0.3 | 0.3 | 0.3 | 0.3 |
| Irgaphos 168 | 0.08 | 0.08 | 0.03 | 0.08 | 0.08 | 0.08 | 0.08 | 0.08 | 0.08 | 0.08 | 0.08 | 0.08 |
| AO 1076 | 0.08 | 0.08 | 0.08 | 0.08 | 0.08 | 0.08 | 0.08 | 0.08 | 0.08 | 0.08 | 0.08 | 0.08 |
| Black Pigment | | | | | | | | | | | 0.18 | 0.18 |
| TiO₂ sample 1 | 0.7 | 1 | 2 | 1 | 2 | 1 | 2 | 1 | 2 | | | |

The fire retardancy was tested for these samples and for 12% samples with no colorant (natural) or with black colorant. As reflected in Table 5, p(FTP) @ 1.6 mm of greater than 0.9 was achieved only in those TiO2-containing sample having 1% TiO₂ or greater in which the level of Lexan-ST (a polycarbonate/polydimethylsiloxane (PC/PDMS) copolymer having 20% weight percent siloxane content based on the total weight of the copolymer and a block length of 50 units of the poly(diorganosiloxane)) was 20%. Fig. 1 shows the relationship between p(FTP) and the % TiO2 in these runs. As is apparent, increasing TiO2 decreases the p(FTP) value.

| Table 5 | | | | | |
|---|---|---|---|---|---|
| Formulation | % TiO₂ | % PC-siloxane | FOT2 (sec) | Stdev (sec) | p(FTP) @ 1.6 mm |
| 13 | 0.7 | 12 | 2.0 | 1.9 | 0.948 |
| 14 | 1 | 12 | 6.3 | 3.8 | 0.406 |
| 15 | 2 | 12 | 9.1 | 5.7 | 0.024 |
| 16 | 1 | 14 | 4.6 | 2.7 | 0.667 |
| 17 | 2 | 14 | 7.0 | 5.0 | 0.117 |
| 18 | 1 | 16 | 3.9 | 2.1 | 0.675 |
| 19 | 2 | 16 | 5.6 | 4.0 | 0.559 |
| 20 | 1 | 20 | 2.5 | 1.8 | 0.962 |
| 21 | 2 | 20 | 2.3 | 3.1 | 0.654 |
| NC2 | natural | 12 | 3.6 | 1.2 | 0.919 |
| BK1 | black | 12 | 2.3 | 1.5 | 0.992 |
| BK2 | black | 12 | 1.7 | 1.6 | 0.986 |

**Example 3:** Theoretical modeling with %polycarbonate-siloxane levels =14.5-21% (PC/ST ratio=5.5 -3.5) indicated an optimum in the Design space of around 18% polycarbonate-siloxane content in compositions with a p(FTP) greater than or equal to 0.9. Samples were therefore prepared containing 18% polycarbonate-siloxane copolymer as indicated in Table 6 using the methods as set forth in Example 1. In addition to the components listed in Table 6, these compositions contained colorant components in total amounts less than 0.01 % by weight. Colorants used in combinations to achieve different colored products included MONARCH 800, BAYFERROX 180MPL, VERDE HELIOGEN K8730, AMARILLO SICOTAN K2001 FG, VERDE OXIDO DE CROMO, Pigment Yellow 119, AZUL SICOPAL K6310 and ultramarine blue. The results of fire-retardance testing of these samples are set forth in Table 7.

| Table 6 | | | | | | |
|---|---|---|---|---|---|---|
| | 22 | 23 | 24 | 25 | 26 | 27 |
| Pellet Polycarbonate | 69.74 | 69.24 | 69.09 | 68.99 | 69.14 | 37.30 |
| Powder feeder Polycarbonate | 8 | 7.5 | 7.35 | 7.25 | 7.4 | 39.80 |
| polycarbonate-siloxane copolymer | 18 | 18 | 18 | 18 | 18 | 17.8 |
| BPADP | 2 | 2 | 2 | 2 | 2 | 2 |
| poly-SAN | 1 | 1 | 1 | 1 | 1 | 1 |
| TSAN | 0.8 | 0.8 | 0.8 | 0.8 | 0.8 | 0.4 |
| PETS (mold release) | 0.3 | 0.3 | 0.3 | 0.3 | 0.3 | 0.3 |
| Irgaphos 168 | 0.08 | 0.08 | 0.08 | 0.08 | 0.08 | 0.08 |
| TiO₂ sample 1 | | 1 | | 1.5 | 1.2 | 1.3 |
| TiO₂ sample 2 | | | 1.3 | | | |

| Table 7 | | | | | |
|---|---|---|---|---|---|
| Formulation | % TiO₂ | % PC-siloxane | FOT2 (sec) | Stdev | p(FTP) @ 1.6 mm |
| 22 | 0 | 18 | 3.1 | 2.9 | 0.987 |
| 23 | 1 | 18 | 3.7 | 2.1 | 0.856 |
| 24 | 1.3 | 18 | 4.1 | 1.9 | 0.880 |
| 25 | 1.5 | 18 | 2.7 | 2.0 | 0.937 |
| 26 | 1.2 | 18 | 4.7 | 1.8 | 0.887 |
| 27 | 1.3 | 17.8 | 4.4 | 1.7 | 0.987 |

## Claims

1. A composition comprising:
(a) a bulk resin component comprising a polycarbonate resin;
(b) a polycarbonate-siloxane copolymer in an amount sufficient to provide an amount of siloxane of at least 3.6% by weight of the total composition; and
(c) a colorant composition comprising titanium dioxide having an organic coating, wherein the amount of titanium dioxide is from I to 1.5% by weight of the total composition.

2. The composition of claim 1 wherein the organic coating comprises an organosiloxane or a trimethylolpropanol.

3. The composition of claim 1 having one or more of the following characteristics:
(a) the bulk resin component makes up at least 50% of the composition;
(b) the bulk resin component further comprises an engineering thermoplastic, preferably a styrene acrylonitrile copolymer or polymethyl(methacrylate);
(c) the colorant composition comprises from 1 to 1.5% by weight of the total composition; or
(d) the organic coating comprises an organosiloxane or trimethylolpropanol.

4. The composition of any of the preceding claims further comprising one or more of the following:
(a) a rubbery impact modifier;
(b) an antidrip agent; or
(c) a flame retardant not being a polycarboante-siloxane copolymer.

5. The composition of claim 4 having one or more of the following characteristics:
(a) the rubbery impact modifier is selected from the group consisting of acrylic rubbers, ASA rubbers, diene rubbers, organosiloxane rubbers, EPDM rubbers, styrene-buradiene-styrene (SBS) or styrene-ethylene-butadiene-styrene (SEBS) rubbers, ABS rubbers, MBS rubbers and glycidyl ester impact modifiers, and mixtures thereof;
(b) the rubbery impact modifier is present in an amount of from 1 to 30% by weight;
(c) the antidrip agent is styrene-acrylonitrile copolymer encapsulated polytetrafluoroethylene; or
(d) the flame retardant is a phosphate flame retardant, preferably bis-phenol A tetraphenyl diphosphate, or a sulfonate, preferably a perfluoroalkane sulfonate, such as potassium perfluorobutane sulfonate.

6. An article, made of the composition of claims 1-5 having one or more wall thicknesses greater than or equal to a first thickness, said article being formed from a molding composition according to claims 1-5 wherein the amount of polycarbonate-siloxane copolymer is selected such that molding composition achieves a V0 UL fire rating at the first thickness.

7. The article of claim 6 having a first thickness of 1.6 mm.

8. A method for forming a light colored, flame retardant polycarbonate article comprising the steps of forming a blend as defined in claims 1-5; and
forming an article from the blend.

9. A method for enhancing the flame retardance of a light colored composition comprising a bulk resin component comprising polycarbonate; a polycarbonate-siloxane copolymer; and a colorant composition comprising titanium dioxide, said method comprising the steps of
(a) using the polycarbonate-siloxane copolymer in a quantity sufficient to provide an amount of siloxane of at least 3.6% by weight of the total composition; and
(b) selecting as the titanium dioxide a titanium dioxide having an organic coating comprising a polyorganosiloxane, trimethylolpropanol, or mixtures thereof, and
(c) using an amount of the said titanium dioxide of from 1 to 1.5% by weight of the total composition.

## Patentansprüche

1. Eine Zusammensetzung, die Folgendes umfasst:
(a) eine Bulk-Harzkomponente, die ein Polycarbonatharz umfasst,
(b) ein Polycarbonat-Siloxan-Copolymer in einer Menge, die ausreicht, um eine Menge an Siloxan von mindestens 3,6 Gewichtsprozent der Gesamtzusammensetzung bereitzustellen, und
(c) eine Färbemittel-Zusammensetzung, die Titandioxid mit einer organischen Beschichtung umfasst, worin die Menge an Titandioxid von 1 bis 1,5 Gewichtsprozent der Gesamtzusammensetzung beträgt.

2. Die Zusammensetzung gemäß Anspruch 1, worin die organische Beschichtung ein Organosiloxan oder ein Trimethylolpropanol umfasst.

3. Die Zusammensetzung gemäß Anspruch 1, die eine oder mehrere der folgenden Eigenschaften hat:
(a) die Bulk-Harzkomponente macht mindestens 50% der Zusammensetzung aus;
(b) die Bulk-Harzkomponente umfasst weiter einen technischen Thermoplast, vorzugsweise ein Styrol-Acrylonitril-Copolymer oder Polymethyl(methacrylat);
(c) die Färbemittel-Zusammensetzung umfasst von 1 bis 1,5 Gewichtsprozent der Gesamtzusammensetzung oder
(d) die organische Beschichtung umfasst ein Organosiloxan oder Trimethylolpropanol.

4. Die Zusammensetzung gemäß einem beliebigen der obigen Ansprüche, die weiter eines oder mehrere der Folgenden umfasst:
(a) einen gummiartigen Elastifikator,
(b) ein Antitropfmittel, oder
(c) ein Flammverzögerungsmittel, das kein Polycarbonat-Siloxan-Copolymer ist.

5. Die Zusammensetzung gemäß Anspruch 4, die eine oder mehrere der folgenden Eigenschaften hat:
(a) der gummiartige Elastifikator ist gewählt aus der Gruppe bestehend aus Acrylkautschuken, ASA-Gummis, Dien-Gummis, Organosiloxan-Gummis, EPDM-Gummis, Styren-Butadien-Styren-(SBS-) oder Styren-Ethylen-Butadien-Styren- (SEBS-)Gummis, ABS-Gummis, MBS-Gummis und Glycidylester-Elastifikatoren und Mischungen davon;
(b) der gummiartige Elastifikator ist in einer Menge von 1 bis 30 Gewichtsprozent vorhanden;
(c) das Antitropfmittel ist Styrol-Acrylonitril-Copolymerverkapseltes Polytetrafluorethylen; oder
(d) das Flammverzögerungsmittel ist ein Phosphat-Flammverzögerungsmittel, vorzugsweise Bisphenol A-Tetraphenyldiphosphat, oder ein Sulfonat, vorzugsweise ein Perfluoralkansulfonat, wie zum Beispiel Perfluorbutansulfonat.

6. Ein Artikel, hergestellt aus der Zusammensetzung gemäß den Ansprüchen 1-5, der eine oder mehrere Wanddicken größer als oder gleich einer ersten Dicke hat, wobei der Artikel aus einer Formmasse gemäß den Ansprüchen 1-5 geformt ist, worin die Menge an Polycarbonat-Siloxan-Copolymer so ausgewählt ist, dass die Formmasse an der ersten Dicke die Feuerwiderstandsklasse V0 UL erreicht.

7. Der Artikel gemäß Anspruch 6, der eine erste Dicke von 1,6 mm hat.

8. Ein Verfahren zum Formen eines hell gefärbten, Flammen hemmenden Polycarbonat-Artikels, das die Schritte des Formens einer Mischung wie in den Ansprüchen 1-5 definiert umfasst, und
Formen eines Artikels aus der Mischung.

9. Ein Verfahren zur Verbesserung der Flammenhemmung einer hell gefärbten Zusammensetzung, die eine Bulk-Harzkomponente umfasst, welche Polycarbonat, ein Polycarbonat-Siloxan-Copolymer und eine Färbemittel-Zusammensetzung umfasst, die Titandioxid umfasst, wobei das Verfahren folgende Schritte umfasst:
(a) Verwendung des Polycarbonat-Siloxan-Copolymers in einer Menge, die ausreicht, um eine Menge an Siloxan von mindestens 3,6 Gewichtsprozent der Gesamtzusammensetzung bereitzustellen, und
(b) Auswahl, als das Titandioxid, eines Titandioxids mit einer organischen Beschichtung, die ein Polyorganosiloxan, Trimethylolpropanol oder Mischungen davon umfasst, und
(c) Verwendung einer Menge des Titandioxids von 1 bis 1,5 Gewichtsprozent der Gesamtzusammensetzung.

## Revendications

1. Composition, comprenant :
(a) un composant de résine en vrac, comprenant une résine de polycarbonate ;
(b) un copolymère polycarbonate-siloxane, en une quantité suffisante pour fournir une quantité de siloxane d'au moins 3,6 % en poids de la composition totale ; et
(c) une composition colorante, comprenant du dioxyde de titane ayant un revêtement organique, dans laquelle la quantité de dioxyde de titane est comprise dans la fourchette de 1 à 1,5 % en poids de la composition totale.

2. Composition selon la revendication 1, dans laquelle le revêtement organique comprend un organosiloxane ou un triméthylolpropanol.

3. Composition selon la revendication 1, présentant une ou plusieurs des caractéristiques suivantes :
(a) le composant de résine en vrac constitue au moins 50 % de la composition ;
(b) le composant de résine en vrac comprend en outre un thermoplastique technique, de préférence un copolymère styrène acrylonitrile ou un polyméthyl(méthacrylate).
(c) la composition colorante fait de 1 à 1,5 % en poids de la composition totale ; ou
(d) le revêtement organique comprend un organosiloxane ou un triméthylolpropanol.

4. Composition selon l'une quelconque des revendications précédentes, comprenant en outre un ou plusieurs des produits suivantes :
(a) un modificateur d'impact caoutchouteux ;
(b) un agent anti-fuite ; ou
(c) un retardateur de combustion qui ne soit pas un copolymère polycarbonate-siloxane.

5. Composition selon la revendication 4, présentant une ou plusieurs des caractéristiques suivantes :
(a) le modificateur d'impact caoutchouteux est sélectionné dans le groupe composé de caoutchoucs acryliques, caoutchouc ASA, caoutchoucs diène, caoutchoucs organosiloxane, caoutchoucs EPDM, caoutchoucs styrène-butadiène-styrène (SBS) ou styrène-éthylène-butadiène-styrène (SEBS), caoutchoucs ABS, caoutchoucs MBS et modificateurs d'impact à base d'ester de glycidyle, et leurs mélanges ;
(b) le modificateur d'impact caoutchouteux est présent en une quantité allant de 1 à 30 % en poids ;
(c) l'agent anti-fuite est du polytétrafluoroéthylène encapsulé dans un copolymère styrène-acrylonitrile ; ou
(d) le retardateur de combustion est un retardateur de combustion à base de phosphate, de préférence du bis-phénol A tétraphényl diphosphate, ou un sulfonate, de préférence un perfluoroalkane sulfonate, tel que du perfluorobutane sulfonate de potassium.

6. Article, formé de la composition des revendications 1 à 5, ayant une ou plusieurs épaisseurs de paroi supérieure ou égale à une première épaisseur, ledit article étant formé d'une composition de moulage selon les revendications 1 à 5, dans lequel la quantité de copolymére polycarbonate-siloxane est sélectionnée de manière que la composition de moulage obtienne un pouvoir coupe-feu V0 ÜL à la première épaisseur.

7. Article selon la revendication 6, présentant une première épaisseur de 1,6 mm.

8. Procédé de formage d'un article en polycarbonate retardateur de combustion, de couleur pâle, comprenant les étapes de formage d'un mélange tel que défini aux revendications 1 à 5 ; et
le formage d'un article à partir du mélange.

9. Procédé d'amélioration de la résistance aux effets de l'incendie d'une composition de couleur pâle composée d'un composant de résine en vrac comprenant un polycarbonate, un copolymère polycarbonate-siloxane ; et une composition colorante, comprenant du dioxyde de titane, ledit procédé comprenant les étapes consistant à :
(a) utiliser le copolymère polycarbonate-siloxane, en une quantité suffisante pour fournir une quantité de siloxane d'au moins 3,6 % en poids de là composition totale ; et
(b) sélectionner comme dioxyde de titane un dioxyde de titane ayant un revêtement organique comprenant un polyorganosiloxane, un triméthylolpropanol, ou des mélanges de ceux-ci, et
(c) utiliser une quantité dudit dioxyde de titane comprise dans la fourchette allant de 1 à 1,5 % en poids de la composition totale.
